# EUROPEAN PATENT APPLICATION

(11) **EP 4 622 164 A1**
(43) Date of publication of application: **24.09.2025**
(21) Application number: 24305433.5
(22) Date of filing: 22.03.2024
(51) Int. Cl.: H04L 9/00, H04L 9/08, H04L 9/30

(54) **METHOD FOR PROTECTING AGAINST SIDE-CHANNEL ATTACKS LATTICE-BASED POST QUANTUM CRYPTOGRAPHIC SCHEMES**

(71) Applicant: THALES DIS FRANCE SAS, 92190 Meudon (FR)
(72) Inventor: PERION, Fabrice, 75006 PARIS (FR); VIGILANT, David, 92240 MALAKOFF (FR)
(74) Representative: Bricks, Amélie

(57) **Abstract**

The present invention relates to a method for securing against side channel attacks execution of a Decompressq(Decode₁(x),1) function designed to be used in an encapsulation algorithm of a Kyber Lattice-based Post Quantum cryptographic key-encapsulation mechanism generating, from a public key pk of a key requesting device, a ciphertext c and a key K to be shared with a key generation device, wherein said Decode₁ function transforms a message m, being a bitstream of length n+1, with n an integer, into an intermediate polynomial whose coefficient of a given index is equal to the bit of the message m with the same index, and wherein said Decompress_{q}(x, 1) function generates, from an output of said Decode₁ function a set of polynomial coefficients of a result polynomial P[X] = P₀ + P₁*X + ...+ Pₙ*Xⁿ by generating a result polynomial coefficient equal to 0 for each bit of said message m equal to 0 and generating a result polynomial coefficient equal to (q+1 )/2 for each bit of said message m equal to 1, in a polynomial ring R_{q} = F_{q}[X]/(Xⁿ+1), where q is a prime number, said method being performed by the key generation device comprising a processor and a memory storing a polynomial coefficients lookup table (T) matching any binary integer i of size w, with w an integer, to a set of w precomputed polynomial coefficients, wherein the precomputed polynomial coefficients of said table are computed by executing said Decompress_{q}(Decode₁(x),1) function and, comprising, instead of computing Decompress_{q}(Decode₁(m),1):
- for each set of w successive bits of said message m, obtaining from said stored polynomial coefficients lookup table (T) a set of w precomputed coefficients matching a binary integer formed by concatenating said w successive bits of said message m,
- generating a result polynomial P[X] from said obtained sets of precomputed coefficients.

## Description

### FIELD OF THE INVENTION

The present invention relates to the field of cryptographic schemes, and of associated cryptographic devices, and more particularly to protecting against side-channel attacks lattice-based post quantum cryptographic schemes.

### BACKGROUND OF THE INVENTION

The increasing computational power of quantum computers is a growing threat to the security of classical cryptographic schemes such as RSA or ECDSA. Such schemes will eventually be completely defenseless against attacks performed using quantum computers. Therefore, work is being done to develop new efficient schemes that would be resistant against such attacks.

Lattice based schemes have been proved resistant to quantum computer attacks. Among this class of schemes, Dilithium and Kyber have been selected by the NIST to become Post-Quantum Cryptography standards for supporting respectively signature and encryption.

Nevertheless, such cryptographic algorithms may be sensitive to side-channel attacks, based on an analysis of the power consumption or electromagnetic signature of the device performing the encryption.

Kyber cryptographic scheme full description can be found in « CRYSTALS-KYBER Algorithm Specifications And Supporting Documentation (version 3.02) » by R. Avanzi, J. Bos, L. Ducas, E. Kiltz, T. Lepoint, V. Lyubashevsky, J. M. Schanck, P. Schwabe, G. Seiler, D. Stehlé, August 4, 2021. In the rest of this document, this reference is referred to as "KYBER Documentation reference". Since Kyber has been selected as future NIST standard, the NIST has published in August 2023 a draft standard "Module-Lattice-Based Key-Encapsulation Mechanism Standard", FIPS203 which reuses almost all functions present in the original Kyber specification.

More specifically, CRYSTALS-Kyber cryptographic scheme comprises a public key encryption function (algorithm 5 of KYBER Documentation reference). This encryption function may be used for encrypting, into a ciphertext c, a message m comprising confidential information to be sent to the owner of the corresponding private key. The same encryption function is also used in the frame of a Key Encapsulation Mechanism (KEM) enabling two entities to securely exchange a shared secret K, such as a shared key to be used as a session key. Such a KEM comprises a key encapsulation algorithm (algorithm 8 of KYBER Documentation reference) which enables an entity, by calling KYBER encryption function, to generate from the public key pk of the other entity the shared secret K and a ciphertext c from which the other entity can retrieve the shared secret K using its private key sk.

KYBER encryption function uses a function called Decompress_{q} which is in charge of converting bits of a message m into polynomial coefficients later used to generate part of the ciphertext c. In the context of the key encapsulation, the message m is a secret seed for generating a shared key, and must be considered as a key. In the context of public key encryption, the message m which is ciphered is confidential information to be protected. Therefore, the message m is a sensitive data which should be protected against any access by anyone other than the two entities cooperating in the exchange of private information or in the Key Exchange Mechanism. Indeed, in the context of Key Encapsulation an attacker gaining knowledge of part of the message m would gain knowledge about part of the ciphertext c and may be able to retrieve the shared secret K. And in the context of Public Key encryption an attacker gaining knowledge of part of the message m would gain knowledge about confidential ciphered information without the knowledge of the private key.

A problem is that the Decompress_{q} function manipulates the bits of the message m one by one for generating corresponding polynomial coefficients and performs for each bit of the message operations which depend on the value of the processed bit. Therefore, it would be fairly easy for an attacker to guess the value of the bits of the message m from a side-channel analysis of the operations performed by the Decompress_{q} function when it processes each bit of the message m. Such a kind of attack has been demonstrated in the following publications :
- Dorian Amiet, Andreas Curiger, Lukas Leuenberger, and Paul Zbinden. 2020. Defeating NewHope with a single trace. In International Conference on Post-Quantum Cryptography. Springer, 189-205
- Bo-Yeon Sim, Jihoon Kwon, Joohee Lee, Il-Ju Kim, Tae-Ho Lee, Jaeseung Han, Hyojin Yoon, Jihoon Cho, and Dong-Guk Han. 2020. Single-Trace Attacks on Message Encoding in Lattice-Based KEMs. 8 (2020), 183175-183191
- Zhuang Xu, Owen Michael Pemberton, Sujoy Sinha Roy, David Oswald, Wang Yao, and Zhiming Zheng. 2021. Magnifying side-channel leakage of lattice-based cryptosystems with chosen ciphertexts: The case study of kyber. IEEE Trans. Comput. (2021).

Therefore, there is a need of a method performing the key encapsulation algorithm of Kyber KEM, or a confidential message encryption using Kyber scheme, and being protected against side channel analysis when performing the step of generating polynomial coefficients from the message m which is performed by the Decompress_{q} function in existing implementations of Kyber scheme.

### SUMMARY OF THE INVENTION

For this purpose and according to a first aspect, this invention therefore relates to a method for securing against side channel attacks execution of a Decompress_{q}(Decode₁(x),1) function designed to be used in an encapsulation algorithm of a Kyber Lattice-based Post Quantum cryptographic key-encapsulation mechanism generating, from a public key pk of a key requesting device, a ciphertext c and a key K to be shared with a key generation device,
wherein said Decode₁ function transforms a message m, being a bitstring of length n+1, with n an integer, into an intermediate polynomial whose coefficient of a given index is equal to the bit of the message m with the same index,
and wherein said Decompress_{q}(x, 1) function generates, from an output of said Decode₁ function a set of polynomial coefficients of a result polynomial P[X] = P₀ + P₁*X + ...+ Pₙ*Xⁿ by generating a result polynomial coefficient equal to 0 for each bit of said message m equal to 0 and generating a result polynomial coefficient equal to (q+1)/2 for each bit of said message m equal to 1, in a polynomial ring R_{q} = F_{q}[X]/(Xⁿ+1), where q is a prime number,
said method being performed by the key generation device comprising a processor and a memory storing a polynomial coefficients lookup table matching any binary integer i of size w, with w an integer, to a set of w precomputed polynomial coefficients, wherein the precomputed polynomial coefficients of said table are computed by executing said Decompress_{q}(Decode₁(x),1) function, and comprising, instead of computing Decompress_{q}(Decode₁(m),1):
   - for each set of w successive bits of said message m, obtaining from said stored polynomial coefficients lookup table a set of w precomputed coefficients matching a binary integer formed by concatenating said w successive bits of said message m,
   - generating a result polynomial P[X] from said obtained sets of precomputed coefficients.

By doing so, bits of the message m are only processed as sets of w bits. Therefore an attacker performing a side channel attack would have much more trouble matching traces with individual values of the bits of the message m.

Said polynomial coefficients lookup table T may match any binary integer i of size w, with w an integer, to a set T[i] of w precomputed polynomial coefficients such that T[i] = Decompress_{q}(Decode₁ (i),1)

The sets of w successive bits of said message m may be processed in a random order.

By doing so, an attacker performing a side channel attack will have difficulties to know to which bits of the message m a captured trace relates.

The polynomial coefficients lookup table may be built in volatile memory and its generation may depend on at least one random mask generated at each execution of the encapsulation algorithm.

By doing so, the table changes at each execution, which makes it impossible for an attacker to combine traces from repeated executions of the algorithm.

According to an embodiment, inputs of the polynomial coefficients lookup table may be masked using a masking function Mask() and a generated random mask R; and said input masked polynomial coefficients lookup table T' may match any binary integer i of size w, with w an integer, to a set T'[i] of w precomputed polynomial coefficients such that T'[Mask(i, R)] = Decompress_{q}(Decode₁ (i),1) .

According to an embodiment, the polynomial coefficients output of the polynomial coefficients lookup table may be masked using a masking function Mask'() and a generated random mask R'; and said output masked polynomial coefficients lookup table T" may match any binary integer i of size w, with w an integer, to a set T"[i] of w precomputed polynomial coefficients such that T"[i] = Mask'(Decompress_{q}(Decode₁(i),1), R') .

According to a second aspect, this invention therefore relates also to a computer program product directly loadable into the memory of at least one computer, comprising software code instructions for performing the steps of the method according to the first aspect when said product is run on the computer.

According to a third aspect, this invention therefore relates also to a cryptographic device comprising a processor and a memory configured for performing the steps of the method according to the first aspect.

### BRIEF DESCRIPTION OF THE DRAWINGS

The following description and the annexed drawings set forth in detail certain illustrative aspects and are indicative of but a few of the various ways in which the principles of the embodiments may be employed. Other advantages and novel features will become apparent from the following detailed description when considered in conjunction with the drawings and the disclosed embodiments are intended to include all such aspects and their equivalents.
- Figure 1 is a schematic illustration of the Kyber encapsulation algorithm and of the Kyber Encryption algorithm given in KYBER Documentation reference;
- Figure 2 is a schematic illustration of the Decompress_{q} function given in KYBER Documentation reference;
- Figure 3 is a schematic illustration of the Decoder function given in KYBER Documentation reference;
- Figure 4 is a schematic illustration of the result of the execution of Decompress_{q}(Decode₁(m) according to the prior art;
- Figure 5 is a schematic illustration of a key generation device according to an embodiment of the present invention;
- Figure 6 is a schematic illustration of the method according to an embodiment of the present invention;
- Figures 7, 8 and 9 are schematic illustrations of example of generation of a result polynomial, where the window size w is equal to 4 according to embodiments of the present invention.

### DETAILED DESCRIPTION OF EMBODIMENTS OF THE INVENTION

The invention relates to methods, and associated devices, for securing against side channel attacks an execution of a Decompress_{q} function used both in the encryption function and in the encapsulation algorithm of Kyber Lattice-based Post Quantum cryptographic key-encapsulation mechanism. Since Kyber encapsulation algorithm calls Kyber encryption function, the rest of the description will describe the case of key encapsulation, which involves more operations, but the method according to the invention also applies to the case where Kyber encryption function is not called in the frame of a key encapsulation but rather called just for encrypting confidential information to be protected from access by anyone other than its recipient.

Such an encapsulation algorithm is performed by a key generation device and generates, from a public key pk of a key requesting device, a ciphertext c and a key K to be shared between the key generation device and the key requesting device.

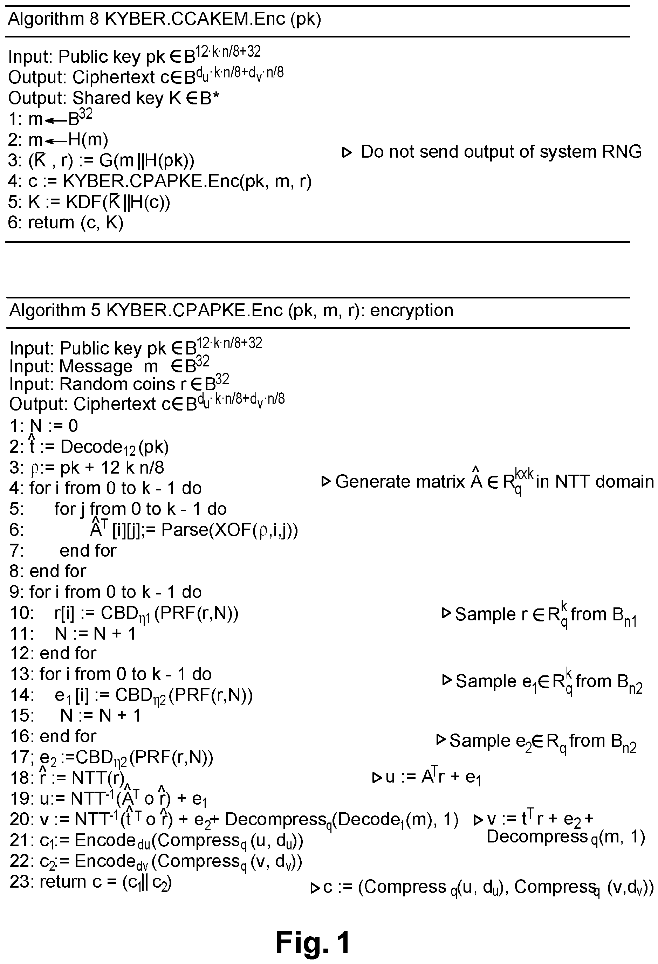

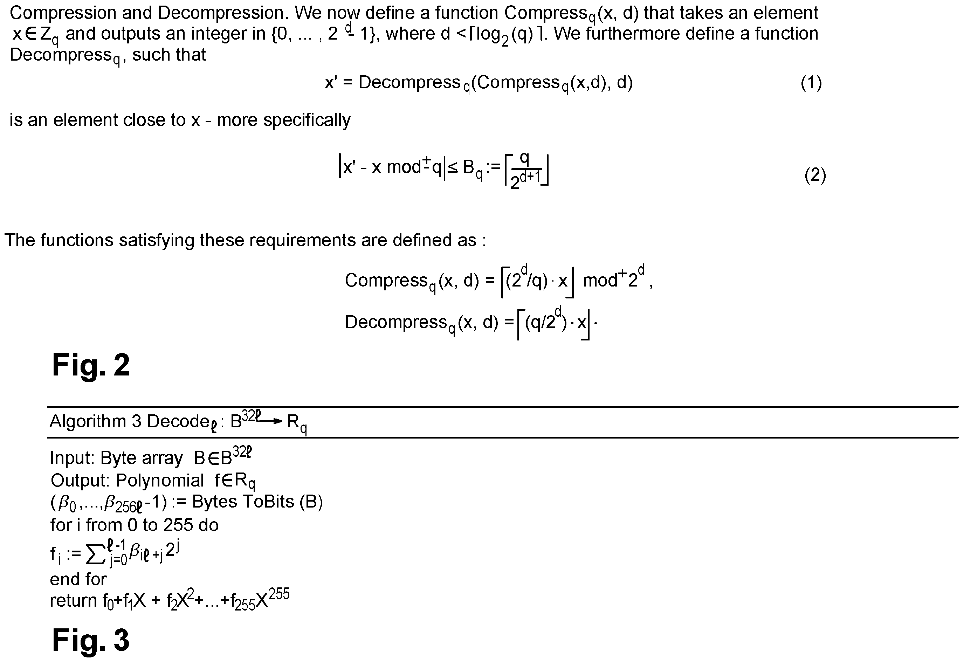

As shown on **Figure 1**, Kyber encapsulation algorithm (algorithm 8 of KYBER Documentation reference) calls Kyber Encryption algorithm (algorithm 5 of KYBER Documentation reference), which in turn calls the Decompress_{q} function. A general definition of this Decompress_{q} function is given in KYBER Documentation reference and reproduced on **Figure 2** as Decompress_{q}(x, d) = rounding((q/2^{d}) * x) with x in Zq, q being a prime number and d an integer. Rounding(x) is the function returning the nearest integer. Rounding(x)=Floor(x+1/2). In KYBER Documentation reference q=3329. When the first argument of Decompress_{q} function is a polynomial, it is applied, as defined above, sequentially to each coefficient of the polynomial used as input.

Kyber Encryption algorithm (algorithm 5 of KYBER Documentation reference) calls Decompress_{q}(x, d) function, on line 20, using as arguments x=Decode₁(m) with m a message, which is a bitstring of length n+1, n an integer, and d=1. In the context of the key encapsulation, the message m is a random secret seed. In the context of public key encryption, the message m is confidential information to be protected.

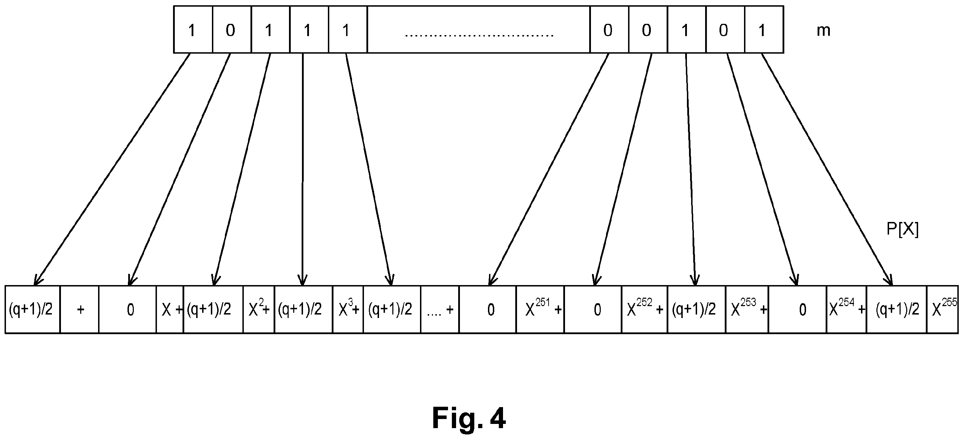

The Decoder function deserializes a byte array of length L into a list of L/*ℓ ℓ-*bit integers. This list of integers can also be considered as a list of coefficients defining uniquely a polynomial. Each monomial corresponds to a degree which depends directly on the index of the coefficient in the list. A general definition of this Decoder function is given in KYBER Documentation reference and reproduced on **Figure 3****.** When ℓ =1, Decode₁ function just transforms the n+1-bit bitstring message m into a list of n+1 1-bit integers, that can be considered as a list of n+1 coefficients which define an intermediate polynomial of degree n, whose coefficient of index i is equal to the bit of index i of the message m. Given the general definition of Decompress_{q}(x, d) given above, the execution of Decompress_{q}(Decode₁(m), 1) generates, as shown on **Figure 4**, from the message m, a set of n values which can be used as coefficients of a result polynomial P[X] = P₀ + P₁*X + ...+ Pₙ*Xⁿ by processing the bits of the message m and by generating a result polynomial coefficient equal to 0 for each bit of said message m equal to 0 and generating a result polynomial coefficient equal to Rounding(q/2)= ((q+1)/2) for each bit of said message m equal to 1, in a polynomial ring R_{q} = F_{q}[X]/(Xⁿ+1). In KYBER Documentation reference n=255.

In existing Kyber implementations, the processing of the bits of the message is performed one bit after the other, which is a security flaw against side-channel attacks as explained above. Therefore, the present invention aims at improving the resistance to such attacks of the computation of the result polynomial P[X] when Kyber Encryption algorithm is executed. In the rest of this description, any reference to the execution of the Decompress_{q} function refers to its execution when called by Kyber Encryption algorithm using as argument d=1. It is noted Decompress_{q}(x,1) or more simply just Decompress_{q}.

The method according to the invention may be performed by a key generation device. Such a device may for example be a personal computer or a server. It may also be a tamper-proof device such as a Hardware Security Module HSM. It may also be a smaller device such as a smartchip.

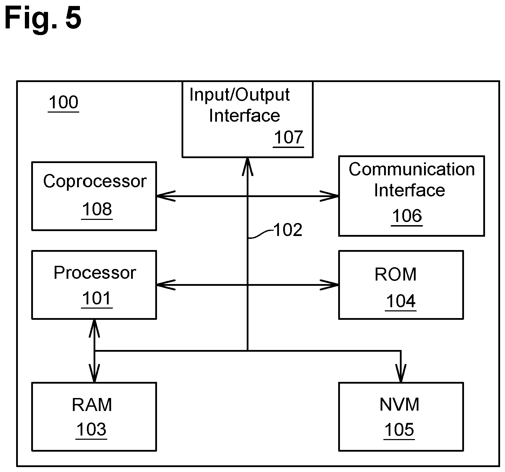

**Figure 5** is a schematic illustration of such a key generation device 100. It may include a processor 101 connected via a bus 102 to a random-access memory (RAM) 103, a read-only memory (ROM) 104, and/or a non-volatile memory (NVM) 105. The processor 101 may further include a communication interface 106 connected to the bus and which may be used to connect the device to various forms of wireless networks, e.g., wide-area networks, WiFi networks, or mobile telephony networks, or to wired networks such as an Ethernet network, which may be used to communicate with the key requesting device. It may also include an input-output interface 107 providing interfaces to an administrator, such as one or more screens, loudspeakers, a mouse, tactile surfaces, a keyboard etc... The key generation device may further include a coprocessor 108. This coprocessor may be dedicated to performing cryptographic computations. For example, it may be a hardware accelerator, such as a FPGA or an ASIC, implementing an extendable output function. This coprocessor may be a separate chip in the device or it may be included with the processor in a SoC.

In order to protect against side channel analysis the generation of a result polynomial P[X] = P₀ + P₁*X + ...+ Pₙ*Xⁿ from the bits of the message m, a first main idea of the invention is to stop processing these bits one by one and instead to process them by chunks of a predefined length obtained by partitioning the message m using a fixed predefined window. By doing so, the processing of a message chunk depends on the value of multiple bits of the message, instead of a single one, which makes it much more difficult to guess the value of these bits from traces when performing a side channel attack.

In order to easily determine the polynomial coefficients corresponding to the multiple bits of a message chunk, without heavy calculation and without processing individual bit values, a second main idea of the invention is to precompute the polynomial coefficients of the result polynomial P[X] matching a message chunk of the predefined length for any value of this message chunk, and to store these precomputed sets of coefficients in a Look-Up Table (LUT). Therefore, instead of computing polynomial coefficients by executing the Decompress_{q} function, the polynomial coefficients corresponding to the bits of a message chunk may be easily determined by a single look-up in the LUT.

More precisely, a polynomial coefficients lookup table T may be stored in the random-access memory (RAM) 103, the read-only memory (ROM) 104, or the non-volatile memory (NVM) 105 of the key generation device. This lookup table T may match any binary integer i of size w, with w an integer, to a set T[i] of w precomputed polynomial coefficients; and the precomputed polynomial coefficients of this table may be computed by executing the Decompress_{q}(Decode₁(x),1) function.

In a first embodiment, the precomputed polynomial coefficients are such that T[i] = Decompress_{q}(Decode₁ (i), 1). The windows size w may for example be equal to 4 or 8, even though different, possibly larger, values may also be used.

As an example, when processing a message chunk equal to i=1010 in binary notation, the corresponding set T[i] would be ((q+1)/2, 0, (q+1)/2, 0).

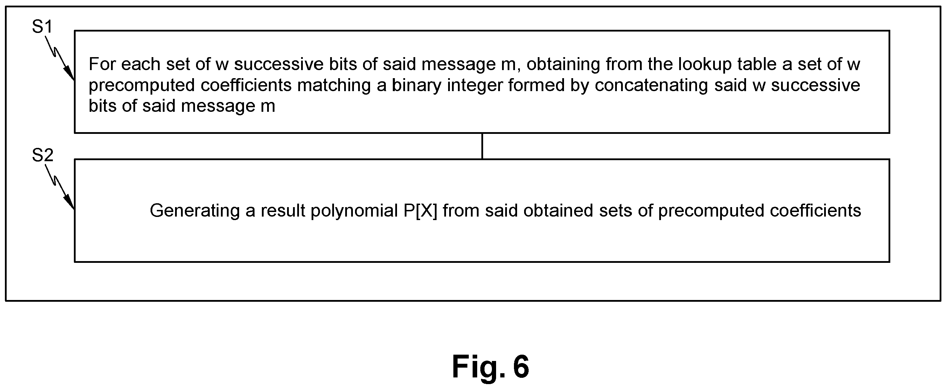

The method according to the invention may then comprise, instead of computing Decompress_{q}(Decode₁(m),1) as instructed in original Kyber Encryption algorithm, the following steps illustrated on **Figure 6****.**

In a first step, S1, the key generating device obtains from the stored polynomial coefficients lookup table a set of w precomputed coefficients matching a binary integer formed by concatenating w successive bits of the message m. This first step may be repeated until all bits of the message m have been processed and a set of w precomputed coefficients has been obtained for each set of w successive bits of the message m.

Then, in a second step S2, the key generation device generates a result polynomial P[X] from the obtained sets of precomputed coefficients. Such a generation is preferably performed such that the coefficient Pi of P[X] with i in {0, ..., n} is the polynomial coefficient obtained from the lookup table which matches the bit of index i in the message m.

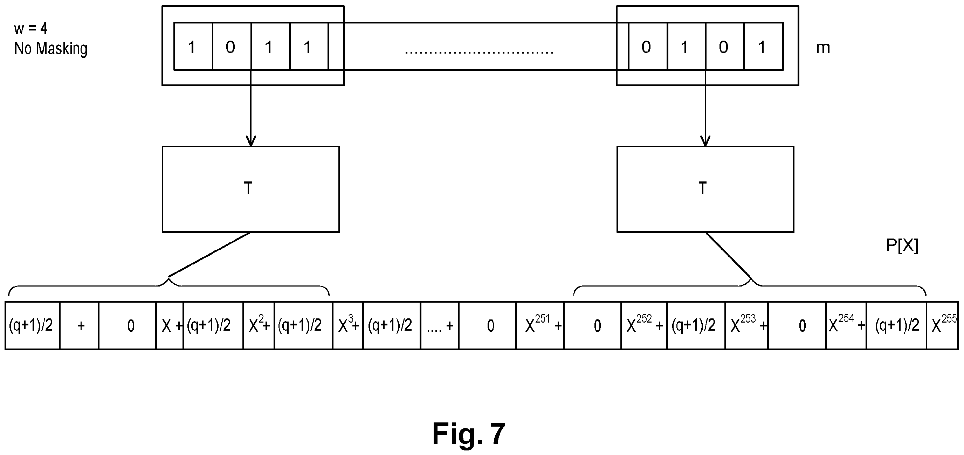

An example of such a generation of a result polynomial is given on **Figure 7**, where the window size w is equal to 4.

As an example, the generation of the result polynomial P[X] may be performed by executing the following algorithm :

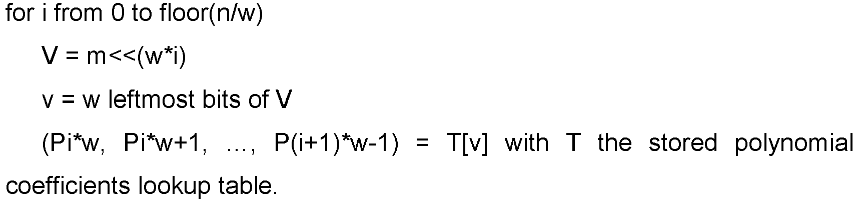

At the first step S1, the bits of the message m may be processed linearly, for example from the leftmost bits of the message m, to the rightmost bits of the message m, or the other way around. Alternatively, in order to make a side-channel attack more difficult, the bits of the message m may be processed in a random order. More precisely, at the first step S1, after a set of w successive bits of said message m has been processed, the next set of w successive bits of the message m to be processed may be selected at random from the bits of the message which have not yet been processed.

In order to further enhance the security of the method, instead of storing statically the polynomial coefficients lookup table in a memory of the key generating device, the lookup table may be regenerated dynamically before each execution of the encapsulation algorithm, depending on a random mask.

In an embodiment, a masking function Mask() and the random mask may be used to mask the input of the polynomial coefficients lookup table. In such a case, the generation of an input masked lookup table T' would comprise generating a binary mask R of length w and then generating the input masked lookup table T' such that it matches any binary integer i of size w, to a set T'[i] of w precomputed polynomial coefficients such that T'[Mask(i, R)] = Decompress_{q}(Decode₁ (i),1). The masking function Mask may for example consist in an arithmetic operation such as an addition or subtraction of the mask R, possibly modulo q. Alternatively, it may be a Boolean operation such as a XOR R operation with the data to be masked ....

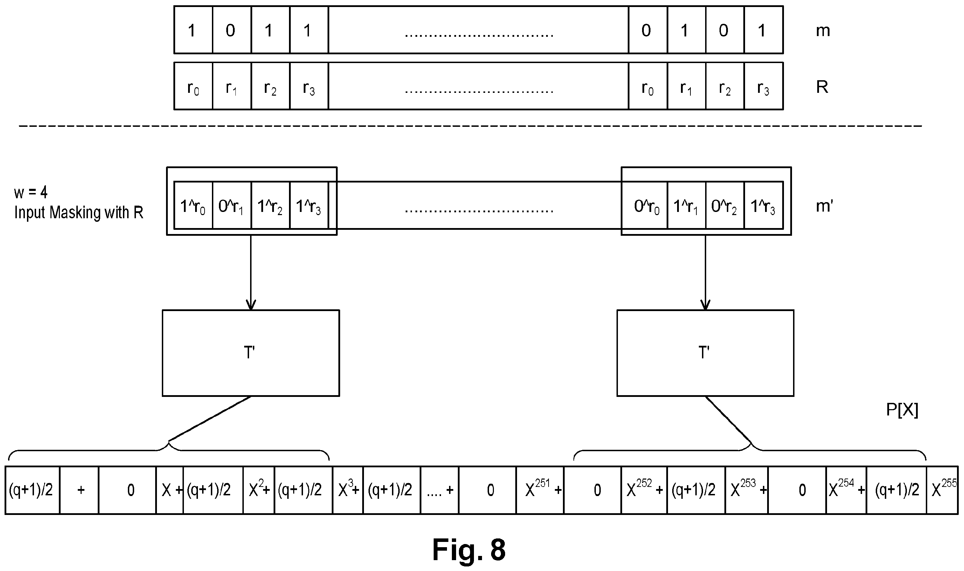

In order to produce the right polynomial coefficients from the message m, using this input masked lookup table T', the message m also has to be masked using the same masking function and the same mask before its bits are processed by the key generating device. Therefore, in such a case, the method according to the invention may comprise a preliminary step during which each set of w successive bits of the message m is masked using the masking function Mask() and the binary mask R. For example when Mask() function is XOR, it produces a masked message m' such that m'=m XOR RI...IR. Then at each iteration of the first step, S1, the key generating device may obtain from the input masked polynomial coefficients lookup table T' a set of w precomputed coefficients matching the binary integer formed by concatenating w successive bits of the masked message m'. And then, at the second step S2, the key generation device may generate a result polynomial P[X] from the sets of precomputed coefficients obtained from the masked message m' and the input masked lookup table T'. An example of such a masking of inputs of the lookup table is shown on **Figure 8** for w=4.

In an embodiment, a masking function Mask'() and a random mask R' may be used to mask the polynomial coefficients which are output from the polynomial coefficients lookup table. In such a case, the generation of an output masked lookup table T" would comprise generating a binary mask R' of length w and then generating the output masked lookup table T" such that it matches any binary integer i of size w, to a set T"[i] of w precomputed polynomial coefficients such that T"[i] = Mask'(Decompress_{q}(Decode₁(i),1), R'). In such a case, at each iteration of the first step, S1, the key generating device may obtain from the output masked lookup table T" a set of w masked precomputed coefficients matching the binary integer formed by concatenating w successive bits of the message m. And at the second step S2, the key generation device may generate a masked result polynomial P'[X] from the sets of masked precomputed coefficients obtained from the message m and from the output masked lookup table T". The method according to the invention may optionally comprise a third step in which the masked result polynomial P'[X] is unmasked by applying the inverse of Mask'() function to each set of w of its coefficients with the binary mask R'.

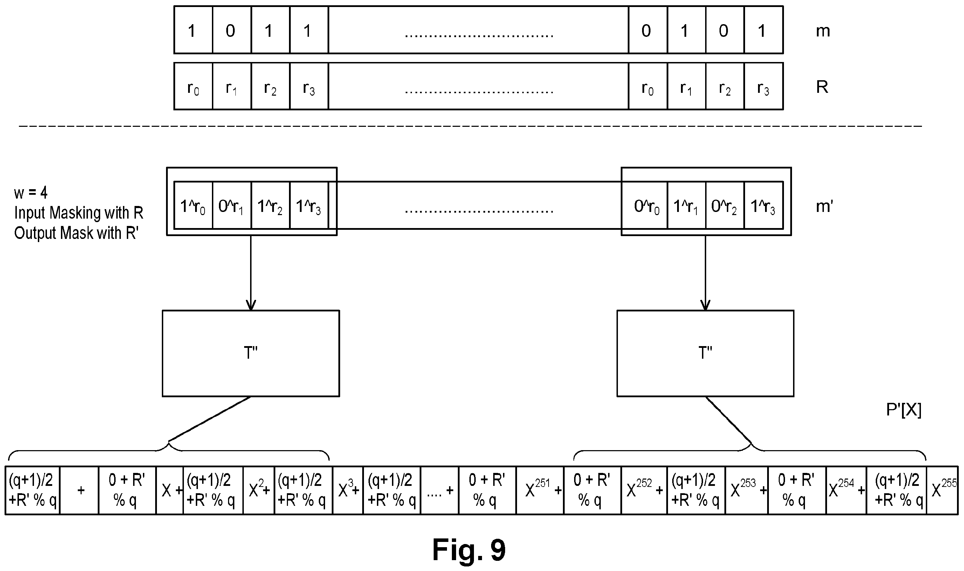

Of course, these two embodiments may be combined and the same mask or two different masks may be used to mask both the inputs and outputs of the polynomial coefficients lookup table. An example of such a combined masking of both inputs and outputs of the lookup table is shown on **Figure 9** for w=4.

According to a second aspect, the invention is also related to a computer program product directly loadable into the memory of at least one computer, comprising software code instructions for performing the steps of the method described above when said product is run on the computer.

According to a third aspect, the invention is also related to a cryptographic device 100 comprising a processor 101 and a memory 103, 104, 105 configured for performing the steps of the method described above.

As a result, the method according to the invention enables to replace independently processing each bit of the message m by look-ups in a look-up table which provides each time several polynomial coefficients, corresponding to the processing of several bits of the message m. Such a method is therefore much better protected against side channel attacks than the original Kyber Decompress_{q} function used in Kyber encryption function and Kyber key encapsulation method.

## Claims

1. A method for securing against side channel attacks execution of a Decompress_{q}(Decode₁(x),1) function designed to be used in an encapsulation algorithm of a Kyber Lattice-based Post Quantum cryptographic key-encapsulation mechanism generating, from a public key pk of a key requesting device, a ciphertext c and a key K to be shared with a key generation device,
wherein said Decode₁ function transforms a message m, being a bitstring of length n+1, with n an integer, into an intermediate polynomial whose coefficient of a given index is equal to the bit of the message m with the same index,
and wherein said Decompress_{q}(x, 1) function generates, from an output of said Decode₁ function a set of polynomial coefficients of a result polynomial P[X] = P₀ + P₁*X + ...+ Pₙ*Xⁿ by generating a result polynomial coefficient equal to 0 for each bit of said message m equal to 0 and generating a result polynomial coefficient equal to (q+1)/2 for each bit of said message m equal to 1, in a polynomial ring R_{q} = F_{q}[X]/(Xⁿ+1), where q is a prime number,
said method being performed by the key generation device comprising a processor (101) and a memory (103,104,105) storing a polynomial coefficients lookup table (T, T', T") matching any binary integer i of size w, with w an integer, to a set of w precomputed polynomial coefficients, wherein the precomputed polynomial coefficients of said table are computed by executing said Decompress_{q}(Decode₁(x),1) function and, comprising, instead of computing Decompress_{q}(Decode₁(m),1):
- for each set of w successive bits of said message m, obtaining from said stored polynomial coefficients lookup table a set of w precomputed coefficients matching a binary integer formed by concatenating said w successive bits of said message m (S1),
- generating a result polynomial P[X] from said obtained sets of precomputed coefficients (S2).

2. The method of claim 1, wherein said polynomial coefficients lookup table T matches any binary integer i of size w, with w an integer, to a set T[i] of w precomputed polynomial coefficients such that T[i] = Decompress_{q}(Decode₁ (i),1).

3. The method of any of claims 1 to 2, wherein the sets of w successive bits of said message m are processed in a random order.

4. The method of any of claims 1 to 3, wherein the polynomial coefficients lookup table is built in volatile memory and its generation depends on at least one random mask (R, R') generated at each execution of the encapsulation algorithm.

5. The method of claim 4 wherein inputs of the polynomial coefficients lookup table are masked using a masking function Mask() and a generated random mask R; and said input masked polynomial coefficients lookup table T' matches any binary integer i of size w, with w an integer, to a set T'[i] of w precomputed polynomial coefficients such that T'[Mask(i, R)] = Decompress_{q}(Decode₁ (i),1) .

6. The method of claims 4 or 5, wherein the polynomial coefficients output of the polynomial coefficients lookup table are masked using a masking function Mask'() and a generated random mask R'; and said output masked polynomial coefficients lookup table T" matches any binary integer i of size w, with w an integer, to a set T"[i] of w precomputed polynomial coefficients such that T"[i] = Mask'(Decompress_{q}(Decode₁(i),1), R').

7. A computer program product directly loadable into the memory of at least one computer, comprising software code instructions for performing the steps of any one of claim 1 to 6 when said product is run on the computer.

8. A cryptographic device (100) comprising a processor (101) and a memory (103, 104, 105) configured for performing the steps of any one of claim 1 to 6.
